# EUROPEAN PATENT APPLICATION

(11) **EP 4 044 049 A1**
(43) Date of publication of application: **17.08.2022**
(21) Application number: 21157429.8
(22) Date of filing: 16.02.2021
(51) Int. Cl.: G06F 16/957

(54) **ARRANGEMENT, SYSTEM AND METHOD FOR AUTOMATED HANDLING OF CONSENT REQUESTS**

(71) Applicant: Al Sports Coach GmbH, 76532 Baden-Baden (DE)
(72) Inventor: Petersen Lorenz, 67480 Roeschwoog (FR)
(74) Representative: Ullrich & Naumann PartG mbB

(57) **Abstract**

The present disclosure refers to an arrangement for automated handling of consent requests on webpages, preferably consent requests regarding data protection issues. The arrangement comprises:
a control unit (6) configured to control at least parts of the arrangement (2),
a web data input (7) configured to receive web data from a web server (13),
a rule storage (8) configured to store handling rules,
a web data analyser (9) configured to analyse the web data received via the web data input (7) and to identify a consent request,
a consent request capturer (10) configured to capture the consent request identified by the web data analyser (9) and to prevent displaying of the consent request to a user (15), and
a consent request handler (11) configured to handle the consent request based on at least one of handling rules stored in the rule storage (8) and user preferences.

The present disclosure further refers to according systems and according methods.

## Description

The present invention relates to arrangements, systems and methods for automated handling of consent requests on webpages, preferably consent requests regarding data protection issues.

With increasing importance and relevance of Internet based services, protection of personal data gained more and more importance. Personal data no longer just refers to data like mailing address, telephone number or day of birth. Each action performed in the Internet or another network leaves traces that may be combined to a user profile and may result in extensive knowledge about a user. A user profile might support a user, e.g. at finding information about a desired product or news meeting the user's interests. In such cases, user profiles are experienced as a great and helpful thing. However, user profiles may also be used in annoying manners, e.g. for harassing advertising or for x-raying a user's life. The boundaries between the different aspects of user profiles are floating and depend on the individual biases of the users.

Therefore, it is important to ensure that users keep control over their personal data. To this end, data protection regulations define admissible and inadmissible usages of personal data. For instance in the European Union, the General Data Protection Regulation (GDPR) came into force in May 2018. The GDPR establishes a complex and protective regulatory regime. Among others, the GDPR defines how personal data have to be handled by data controllers and processors and which steps have to be taken to protect personal data against impermissible uses. One basic principle is the requirement of a user's consent, when personal data are collected, stored or processed in other ways.

This approach is very helpful in many aspects of daily life. However, there are also cumbersome aspects. When visiting websites, users very often have to consent to the usage of cookies or other privacy relevant items. A consent request is presented to the user, e.g. in a slide-in or pop-up window, and the user has to confirm to which extend cookies or uses of personal data are accepted. These consent requests are presented on the first visit of the website and after expiration of an earlier consent. However, some websites generate consent windows at each visit, sometimes even at each reload of a previously presented webpage. This results in the fact that many users are annoyed by the consent requests and/or click at "accept all" (or the like) on each consent request. Just few users really read the presented information and evaluate the consent they are about to give. This means that the data protection regulations result in the contrary, namely that the content of the consent request are ignored and the users give their consent without evaluation of the request. There is no possibility to reduce the mass of consent requests to an acceptable amount.

According to one aspect, the present disclosure provides technical means for reducing the amount of consent requests presented to a user or even for avoiding these consent requests completely. Nevertheless, the present disclosure may ensure high flexibility and high customisability.

According to one embodiment of the present disclosure, the aforementioned aspect is accomplished by an arrangement comprising the features of claim 1. According to this claim, the arrangement comprises:
a control unit configured to control at least parts of the arrangement,
a web data input configured to receive web data from a web server,
a rule storage configured to store handling rules,
a web data analyser configured to analyse the web data received via the web data input and to identify a consent request,
a consent request capturer configured to capture the consent request identified by the web data analyser and to prevent displaying of the consent request to a user, and
consent request handler configured to handle the consent request based on at least one of handling rules stored in the rule storage and user preferences.

According to another embodiment of the present disclosure, the aforementioned object is accomplished by a system comprising the features of claim 10. According to this claim, the system comprises:
multiple arrangements according to the present disclosure, and
a cloud rule system configured to store handling rules,
wherein at least one of the control unit, the web data analyser and the consent request handler of each arrangement is configured to download handling rules from the cloud rule system and to update handling rules stored in the rule storage of the respective arrangement.

According to yet another embodiment of the present disclosure, the aforementioned object is accomplished by a method comprising the features of claim 15. This method may be used for operating an arrangement of the present disclosure and/or a system according to the present disclosure. According to this claim, the method comprises:
receiving, via a web data input, web data from a web server,
accessing at least one handling rule stored in a rule storage,
analysing, by a web data analyser, the web data regarding the presence of a consent request,
capturing, by a consent request capturer, the consent request thereby preventing displaying of the consent request to a user, and
handling, by a consent request handler, the consent request based on the at least one handling rule and/or based on user preferences.

It has been recognized that most consent requests can be grouped into one or several generic categories. These categories might refer to the kind of data stored and/or handled in reaction to the response to the consent request and/or how the data is used. When the consent request refers to requests regarding data protection issues, preferably to the handling of cookies, the consent request might ask for storing an essential cookie that is required for visiting a website. This cookie might include an authentication cookie which improves security at visiting a website. In this case, the consent request might be grouped into the category "essential cookies". Other consent requests might ask for storing personal presences for a website so that these consent requests might be referred to as "personal preferences cookie". Other consent requests might ask for storing marketing relevant data or social media related data, which leads to the usage of according categories. Other consent requests might ask for the approval of storing data on the web server for tracking a user's behaviour. Consent requests might also combine different aspects, e.g. regarding essential cookies, social media cookies and storing user behaviour data. This short and not concluding list shows that most consent requests (probably even all of them) can be mapped on several generic categories. If the user is asked to decide which generic categories of consent requests he/she is willing to accept, most consent requests can be mapped on these basic decisions of the user. Thus, consent request can be handled automatically and in line with the user's decision and the users are no longer annoyed by a high number of requests. They can concentrate on important issues, e.g. when a website asks for a very unusual consent.

For implementing this concept in an arrangement, the present disclosure uses handling rules that define how a consent request can be handled in an automated way. This may include that a handling rule defines, how a specific consent request can be mapped on a user's basic decisions.

According to one embodiment of the present disclosure, the arrangement comprises a control unit, a web data input, a rule storage, a web data analyser, a consent request capturer, and a consent request handler.

The control unit may control one or several units of the arrangement during its operation. It might provide an interface for user interaction, might control an initial setup of the arrangement, might provide an interface to a superordinate system and/or might perform other central tasks of the arrangement.

The web data input can be configured to receive web data. The web data might originate directly from a web server or might be received from an intermediate entity, such as a web browser. The web data might include complete webpages, e.g. HTML (HyperText Markup Language) documents, and/or other webpage related data, like CSS (Cascading Style Sheets) code or scripts for a scripting language, such as JavaScript. The web data which are input to the web data input should be capable of representing and/or containing a consent request, so that the arrangement according to the present disclosure can handle a consent request.

The rule storage can be configured to store one or several handling rules. The rule storage might be formed by an individual storage or by an area of another storage used for various purposes. The rule storage might be a volatile storage (like RAM - Random Access Memory) or a non-volatile storage (like a hard disk, a solid state disk, a flash drive, etc.). The size and the structure of the rule storage might be adapted to the data structure of the handling rules stored in the rule storage. The content of the rule storage might be stored in a computer readable way. However, the handling rules stored in the rule storage might also be encrypted. In the latter case, a crypto unit might be assigned to the rule storage for encrypting or decrypting a handling rule that is stored to or read from the rule storage. The rule storage might also include a rule storage access control that limits the access to the rule storage to dedicated units.

The web data analyser can analyse the web data received via the web data input regarding the presence of a consent request. As soon as the web data analyser identifies a consent request, it might isolate the consent request and indicate the identified consent request to other units of the arrangement, e.g. the consent request capturer and the consent request handler. At analysing the web data, the web data analyser might use one or more handling rules stored in the rule storage.

The consent request capturer can capture the consent request identified by the web data analyser. This particularly includes that the consent request capturer can prevent displaying the consent request to the user. This task can be fulfilled in various ways, where the technique may be based on the implementation of the arrangement of the present disclosure and/or on the units interacting with the arrangement.

The consent request handler can handle the consent request in an automated way, i.e. without user involvement. To this end, the consent request handler might use one or more handling rules and/or user preferences, where the user preferences might be defined by the user during an initial setup of the arrangement.

A "consent request", which can be handled by an arrangement according to the present disclosure, can refer to various consents and can be represented in various ways. Preferably, the consent request refers to consents regarding a webpage or a website that is accessible via a network, e.g. the Internet. The consent might refer to various issues. Preferably, the consent refers to data protection issues, preferably regarding storing cookies and/or using personal data of the user. The consent request can be embedded in web data in various ways and can be presented to the user in various ways. In principle, each know consent request can be used in connection with the present disclosure, e.g. consent requests displayed in slide-in or pop-up windows and/or consent requests contained in HTML text or CSS code.

In principle, a "handling rule" might be anything that is capable to define how a consent request is handled. This might include definitions how a consent request can be recognised, how a response to a consent request can be given, how a response to a consent request is mapped on user preferences, how a response to a consent request is input, and/or how a consent request can be hidden from the user. These examples show the capabilities of the handlings rule used at the present disclosure. A handling rule can be represented in different ways. Preferably, a handling is represented by a dataset. According to one embodiment, the handling rule is defined in a markup language, such as XML (Extensible Markup Language).

The handling rules might comprise common rules and special rules. A special rule refers to a specific webpage / website. A common rule refers to several webpages / websites and takes benefit of the fact that many websites uses dedicated frameworks for dealing with consent requests. Each webpage / website that uses such a dedicated framework might be handled with the same common rule.

The arrangement according to the present disclosure and its components might be implemented in various ways. They can be implemented by hardware, by software or by a combination of hardware and software. They can be adapted for the usage with various user devices. A mobile device, such as a tablet computer, a smart phone, a netbook, or a smartphone, can be used as well as a personal computer or other desktop computers. Such a user device may comprises a hardware processor, RAM (Random Access Memory), non-volatile memory (e.g. flash memory or hard disk), an interface for accessing a network (e.g. WiFi, LTE (Long Term Evolution), UMTS (Universal Mobile Telecommunications System), or Ethernet), at least one input device (e.g. a keyboard, a mouse, or a touch sensitive surface), and at least one output device (such as a display).

According to one embodiment, at least one of the control unit, the web data analyser and the consent request handler is configured to trigger download and/or update of a handling rule in the rule storage. This provides the possibility to maintain the handling rules stored in the rule storage without user involvement. Handling rules can be maintained in a central unit, from which one or several handling rules are downloaded to the rule storage.

As already mentioned, a handling rule can define various issues so that the concept of handling rules can be used rather universally. According to one embodiment, a handling rule may define at least one of characteristics of a consent request contained in web data, characteristics of responding to a consent request, and structure of data stored after responding to a consent request. "Characteristics of a consent request" can refer to anything that is typical for a specific consent request. For example, this might include, how a consent request is displayed to the user, how a consent request is implemented and identifiable in web data, and/or to which consent category the consent request can be mapped. "Characteristics of responding to a consent request" can refer to anything that refer to the response of the consent request. This might include selectable options or number and names of clickable buttons. The "structure of data stored after responding to a consent request" refers to a specific approach of responding to consent request. With the knowledge of the data structure, a consent request can be answered a consent request by storing appropriate data to an appropriate memory.

According to one embodiment, for preventing displaying of the consent request to a user, the consent request handler is configured to change display settings of the consent requests, to change display settings of a browser windows and/or to cancel a display action for the consent request. At changing display settings, a parameter can be set to "hidden" (or the like) so that the consent request is not displayed to the user. Thus, the consent request can be hidden from the user without considerable impact to the system with which the arrangement according to the present disclosure interacts.

According to one embodiment, the consent request handler is configured to perform at least one of triggering virtual clicking on a button of the consent request, selecting an option of the consent request, storing a cookie in a local storage and storing (other) data in a local storage. Thus, the consent request handler can be provided with several ways of responding to a consent request. At "virtual clicking", the consent request handler would generate an input which the consent request can interpret as a click on a specific button. Such a virtual click might be performed by setting a flag of the consent request or by using user interface automation functions, just to name two of various possibilities. "Selecting an option" might include selecting a specific radio button, a specific option of a pulldown menu, or similar ways of presenting and selecting different options. "Storing a cookie" can be used, if the consent request refers to the approval of a cookie. In this case, the consent request handler can store a cookie in a local storage, where the consent request would expect a cookie and/or a status flag for a made decision. By storing this piece of information, the consent request assumes that the approval was already given and the consent request will not be displayed to the user again. "Storing (other) data in a local storage" might include storing data into a protocol of a web browser that keeps track of accepted consent requests.

According to one embodiment, the arrangement additionally comprises a load request handler configured to retrieve load requests for a new webpage and to trigger retrieval of a handling rule for the new webpage. Such a load request handler may improve performance of the arrangement. If a user requests loading of a new webpage, e.g. by typing a URL (Uniform Resource Locator) in the address bar of a web browser or by clicking a hyperlink, the load request handler may recognize this request and trigger an update or another way of retrieval of a handling rule for the new webpage. Thus, downloading of the web data for the new webpage and retrieval of a handling rule are performed parallel to each other so that the handling rule can be available as soon as the web data is ready for being analysed.

According to one embodiment, the arrangement additionally comprises a consent request notifier configured to notify a user of a handled consent request. This notifier might be implemented as a notification window that is displayed to the user and removed automatically after a couple of seconds. It might also be implemented by a notification badge that might for example appear on an extension icon or another suitable place. This notifier allows a user to recognize, when a consent is given, and to evaluate the given consent, if desired.

According to one embodiment, at least one of the control unit, the consent request capturer and the consent request handler comprises a feedback input, the feedback input being capable of receiving a user input regarding failed capturing and/or handling of a consent request. In this way, the user can provide feedback, if the arrangement fails to handle a consent request and/or if the consent request is displayed to the user. This embodiment is beneficial, if the handling rules are maintained by a central cloud rule system. Based on the feedback, the cloud rule system can be updated, e.g. by adapting an existing handling rule or by generating a missing handling rule.

According to one embodiment, the arrangement is implemented as a web browser extension and/or is configured to communicate with a web browser and/or a cloud rule system via one or several application programming interfaces. Implementing the arrangement as a browser extension allows for flexible integration of the arrangement into environments known to the user. Using application programming interfaces (API) provides a universal tool for interaction with the web browser, the cloud rule system and components of the arrangement.

According to one embodiment, the system according to the present disclosure comprises multiple arrangements according to the present disclosure, and a cloud rule system configured to store handling rules, wherein at least one of the control unit, the web data analyser and the consent request handler of each arrangement is configured to download handling rules from the cloud rule system and to update handling rules stored in the rule storage of the respective arrangement. With this embodiment, one cloud rule system can supply multiple arrangements with handling rules and maintaining of handling rules is simplified considerably. Besides that, a pull-environment can be established with a high security standard and reduced download traffic. The cloud rule system might be configured as a central point for distributing handling rules and/or as a high availability node.

According to one embodiment of the system, at least one of the control unit, the web data analyser and the consent request handler of each arrangement is additionally configured to download each of the handling rules stored at the cloud rule system, a predefined subset of the handling rules stored at the cloud rule system and/or a handling rule for a currently accessed website.

Performing a bulk update, i.e. updating each available handling rule from the cloud rule system, results in good performance of the arrangements, as each potentially required handling rule is already available in a local rule storage. However, each bulk update might require a high download volume. Therefore, this approach might be less economic with a very high number of available handling rules, e.g. several million handling rules.

Performing an on-demand update, i.e. updating the handling rules when a website / webpage is accessed, avoids download of not required handling rules. Therefore, this approach is very economic and might be very useful in networks with limited bandwidth or reduced download volumes, such as mobile networks. As each handling rule has to be downloaded before applying it to web data, this approach might be less responsive than a bulk update.

Performing a selective update, i.e. updating a predefined subset of handling rules, might be a good compromise between the amount of downloaded data and performance. A predefined subset might include several presumably important websites. These websites might include highly frequented websites, websites often visited by the user of the arrangement, etc. It is also possible that the user can select (or deselect) categories of presumably important websites, e.g. websites related to social media, shopping, news, finance, knowledge, etc. This approach might be combined with an on-demand update for providing full coverage of available handling rules.

According to one embodiment, the system additionally comprises a rule handling system, the rule handling system being linked communicatively to the cloud rule system and being configured to maintain handling rules stored in the cloud rule system. In this way, handling rules can be updated (e.g. at changes on websites), new handling rules can be added, missing or failing handling rules can be tracked (e.g. based on feedbacks from the users), obsolete handling rules can be deleted, etc. The rule handling system can be semi-automated. For instance, an automated part of the rule handling system may classify available handling rules or create new handling rules. As soon as problems arise, the rule handling system might involve a rule editor for human assistance.

According to one embodiment, the rule handling system uses a machine learning algorithm for improving handling rules and/or is configured to perform at least one of tracking successfully applied handling rules, tracking update request for handling rules and tracking missing handling rules. Using a machine learning algorithm leads to a rule handling system that adapts itself to changing requirements. By evaluating successfully applied handling rules, the rule handling system can detect, which handling rules are up-to-date. By tracking update requests, the rule handling system can detect, which handling rules seems to be outdated. By tracking missing handling rules, e.g. based on feedbacks from users, the rule handling system can detect required new handling rules.

There are several ways how to design and further develop the teaching of the present disclosure in an advantageous way. To this end, it is to be referred to the patent claims and to the following explanation of preferred examples of embodiments, illustrated by the drawing. In connection with the explanation of the preferred embodiments of the invention by the aid of the drawing, generally preferred embodiments and further developments of the teaching will be explained. In the drawing
- Fig. 1: is a schematic diagram of an embodiment of a system according to the present disclosure,
- Fig. 2: is a sequence diagram of an embodiment of a method according to the present disclosure,
- Fig. 3: is a flow chart for a handling rule update as applicable in an embodiment according to the present disclosure,
- Fig. 4: is a flow chart for a usage of a handling rule as applicable in an embodiment according to the present disclosure,
- Fig. 5: is a flow chart for a usage of two different types of handling rules as applicable in an embodiment according to the present disclosure,
- Fig. 6: is a flow chart for an embodiment of handling a consent request according to the present disclosure, and
- Fig. 7: is a flow chart for another embodiment of handling a consent request according to the present disclosure.

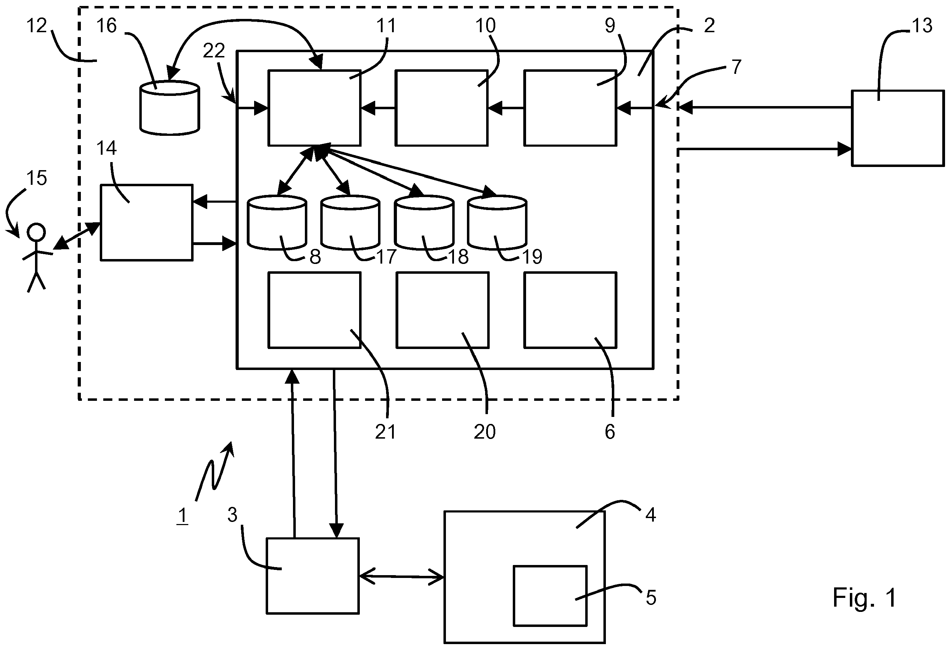

Fig. 1 shows a schematic diagram of an embodiment of a system according to the present disclosure. The system 1 comprises several arrangements 2 (only one displayed), a cloud rule system 3, and a rule handling system 4, where the rule handling system 4 uses a machine learning algorithm 5. Each arrangement 2 comprises a control unit 6, a web data input 7, a rule storage 8, a web data analyser 9, a consent request capturer 10, and a consent request handler 11. The control unit 6 controls operation of different units of the arrangement 2. The arrangement 2 is implemented as a browser extension to a web browser 12 (not regarded as part of system 1), which can download webpages from a web server 13 (not regarded as part of system 1) and display downloaded webpages on a browser window 14 to a user 15. The web browser 12 additionally comprises a local storage 16 for storing data like cookies. Arrangement 2 additionally comprises a preference storage 17, a protocol storage 18, an exception storage 19, a load request handler 20, and a notifier 21. Besides that, the arrangement 2 comprises a feedback input 22, which is communicatively linked to the consent request handler. This feedback input 22 allows provision of user feedback, e.g. regarding fails handling or capturing of a consent request.

When arrangement 2 is set up, the user 15 is guided through a setup procedure that may be controlled by the control unit 6. During this setup procedure, the user 15 receives some basic information about the arrangement and its operation principle. Besides that, the user 15 has to answer, which consent categories he/she is generally willing to accept. With reference to cookies, possible options might be "essential cookies", "personal preference cookies", "statistic cookies", "marketing cookies", "social media cookies", and "all cookies". These options are just provided as examples and may comprise other and/or further options. Additionally, the user 15 might be asked to select website categories used at a selective update of handling rules. Further, the user 15 might choose an acceptable network usage, which can be used at defining the update procedure for the handling rules (bulk, on-demand, selective update). The user's decisions are stored in the preference storage 17. The control unit 6 provides a user interface for accessing and changing these preferences / settings after the initial setup.

After initial setup and at a start of the browser 12 and of the arrangement 2, the control unit 6 might initiate a bulk or selective update of the handling rules stored in rule storage 8. If the arrangement 2 should use on-demand updates, no rule update is required at this stage.

During operation, the user 15 might open a website in the browser window 14 of the web browser 12. The load request handler 20 detects the load request for a website and initiates a check of the required handling rule. During this check, availability of the required handling rule can be verified. If a required handling rule is available, it can be verified that the rule was updated within a predefined period of time, e.g. within the last 24 hours.

Parallel to this handling rule check, the web browser 12 accesses the web server 13 and downloads the requested webpage. The web data defining the webpage is input to the web data input 7. At arrangement 2, the web data is input to the web data analyser 9, which analyses the web data and tries to identify a consent request. If a consent request is identified in the web data, the identified consent request is forwarded to the consent request capturer 10 and the consent request handler 11. The consent request capturer 10 captures the consent request and prevents displaying of the consent request on the browser window 14. This can be done by making the consent request does not appear on bowser window 14, e.g. by setting appropriate properties of the consent request to the value "hidden" and therefore cancelling the action that would show the request. The consent request handler 11 responds to the consent requests. To this end, the consent request handler 11 accesses the required rule (common rule or special rule) stored in the rule storage 8 and accesses settings stored in the preference storage 17. Additionally, the consent request handler 11 verifies that no exception is stored in the exception storage 19 for the loaded webpage / website. Based on these pieces of information, the consent request handler 11 responds to the consent request. When a response is generated, the notifier 21 notifies the user 15 of successful handling of a consent request. For this purpose, notifier 21 might generate a notification badge that would appear on an extension icon. Additionally, the consent request handler 11 might add the handled consent request to a protocol maintained in the protocol storage 18. With the aid of the protocol storage 18, user 15 might follow the given consents and/or might revoke one or several of them.

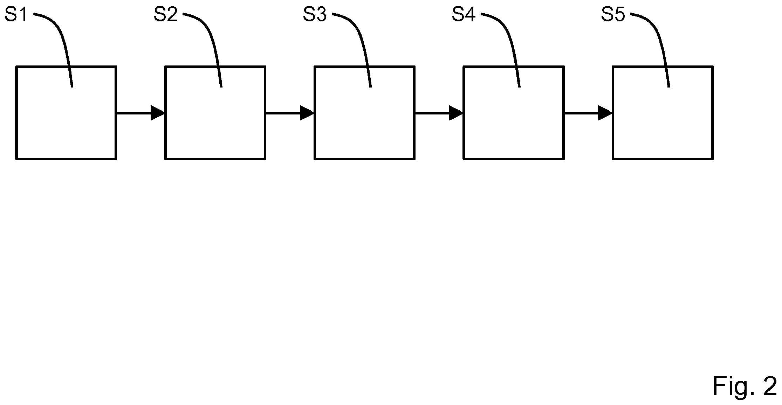

Fig. 2 shows some basic step of an embodiment of a method according to the present disclosure, where the method uses the system 1 according to Fig. 1. In step S1, web data are received via the web data input 7. The web data might be received directly from the web server 13 or via the web browser 12. In step S2, at least one handling rule stored in the rule storage 8 is accessed. In step S3, the web data are analysed by the web data analyser 9 regarding the presence of a consent request. In step S4, the consent request identified by the web data analyser 9 is captured by the consent request capturer 10, thereby preventing displaying of the consent request to the user 15. In step S5, the consent request is handled by the consent request handler 11, based on the at least one handling rules and/or user preferences (stored in the preference storage 17).

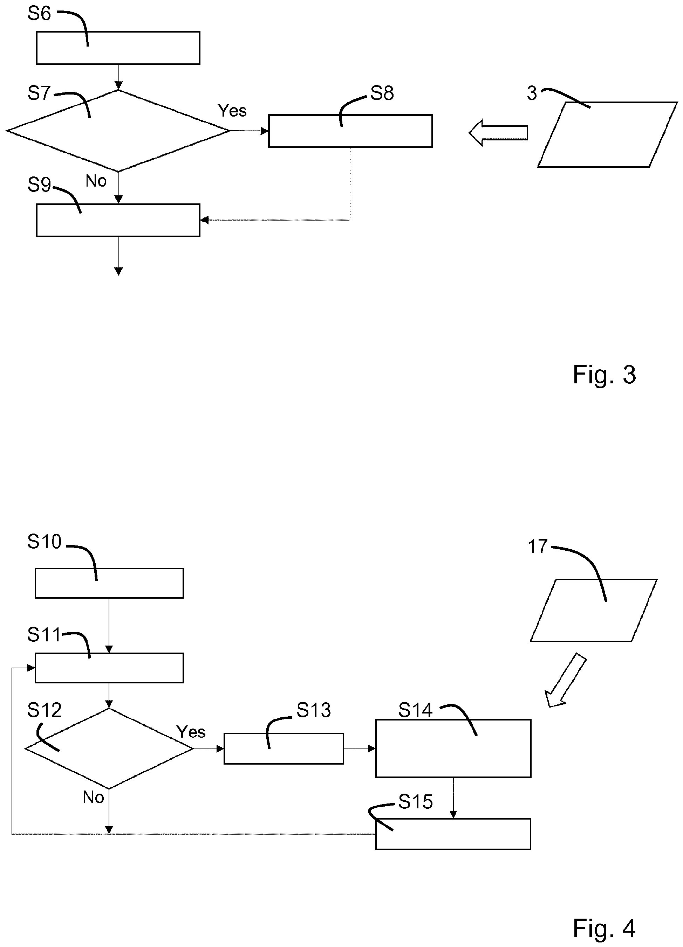

With reference to Figures 3 to 7, further details of embodiments are described. Fig. 3 shows a flow chart for a handling rule update. In step S6, a user opens the browser 12. In step S7, it is determined, whether an update of handling rules is needed. If an update is needed ("Yes"), the handling rules are updated in step S8. To this end, the cloud rule system 3 is accessed. If no update is needed ("No") or if step S8 is finished, the method ends at step S9 "Continue".

Fig. 4 shows a flow chart for a usage of a handling rule. In step S10, a user opens a website. In step S11, received web data is analysed regarding the presence of a consent request. In step S12, it is determined, whether a handling rule can be matched to a found consent request. If there is a matching handling rule ("Yes"), the consent request is hidden (step S13), the matching handling rule is combined with user preferences (step S14) loaded from the preference storage 17, and the consent request is handled by the consent request handler (step S15). If there is no matching handling rule ("No") or if the identified consent request is handled successfully, the method returns to step S11 and continues analysing received web data.

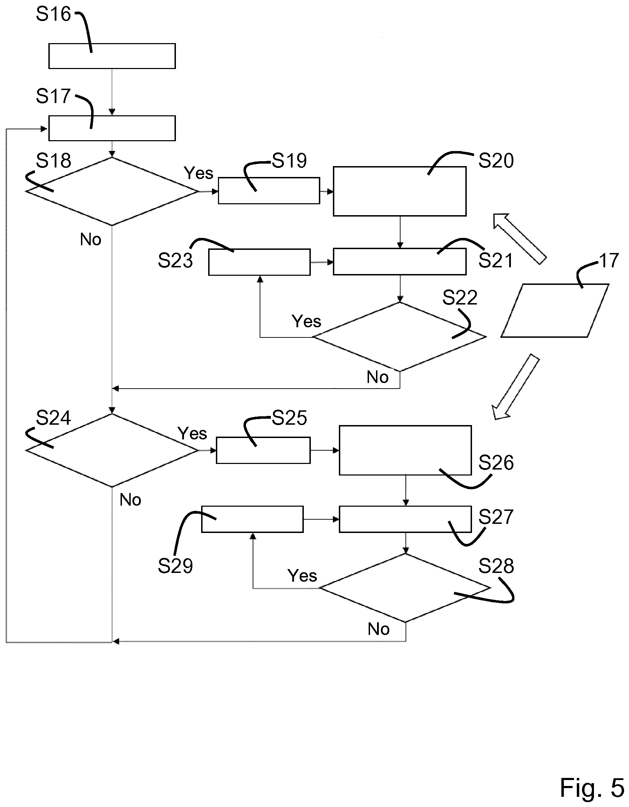

Fig. 5 shows a flow chart for a usage of two different types of handling rules. This embodiments uses virtual clicking for responding to a consent request. Besides that, special rules and common rules are applied. It should be noted that the sequence of application of different types of rules can be changed. In step S16, the user opens a website. In step S17, received web data is analysed regarding the presence of a consent request. In step S18, it is determined, whether a special rule can be matched to a found consent request. If there is a matching special rule ("Yes"), the consent request is hidden (step S19) and the matching special rule is combined with user preferences (step S20) loaded from the preference storage 17. In step S21, the consent request is analysed regarding matching selectors. In step S22, it is determined, whether a matching selector is found. If there is a matching selector ("Yes"), a click is emulated in step S23. If no (more) matching selector ("No") is found at step S22 or if no matching special rule ("No") is found in step S18, the method continues in step S24, where a matching common rule is determined. If there is a matching common rule ("Yes"), the consent request is hidden (step S25) and the matching common rule is combined with user preferences (step S26) loaded from the preference storage 17. In step S27, the consent request is analysed regarding matching selectors. In step S28, it is determined, whether a matching selector is found. If there is a matching selector ("Yes"), a click is emulated in step S29. If no (more) matching selector ("No") is found at step S28 or if no matching common rule ("No") is found in step S24, the method returns to step S17 and continues analysing received web data.

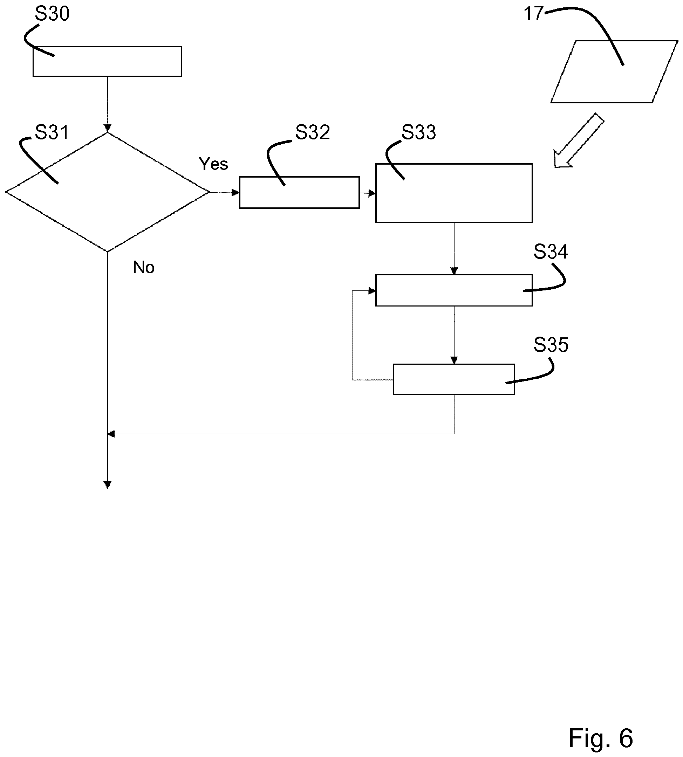

Fig. 6 shows a flow chart for another embodiment of handling a consent request, which uses a "synthetic" method for responding to a consent request. In step S30, the user opens a website. In step S31, it is determined, whether a matching special "synthetic" rule can be found. If a matching special "synthetic" rule is found ("Yes"), the consent request is hidden (step S32) and the matching special "synthetic" rule is combined with user preferences (step S33) loaded from the preference storage 17. In step S34, it is determined which data required for responding to the consent request still has to be written to the local storage 16. The determined data is stored to the local storage 16 in step S35. If all data is written, a reload of the website is triggered (step not explicitly shown in Fig. 6).

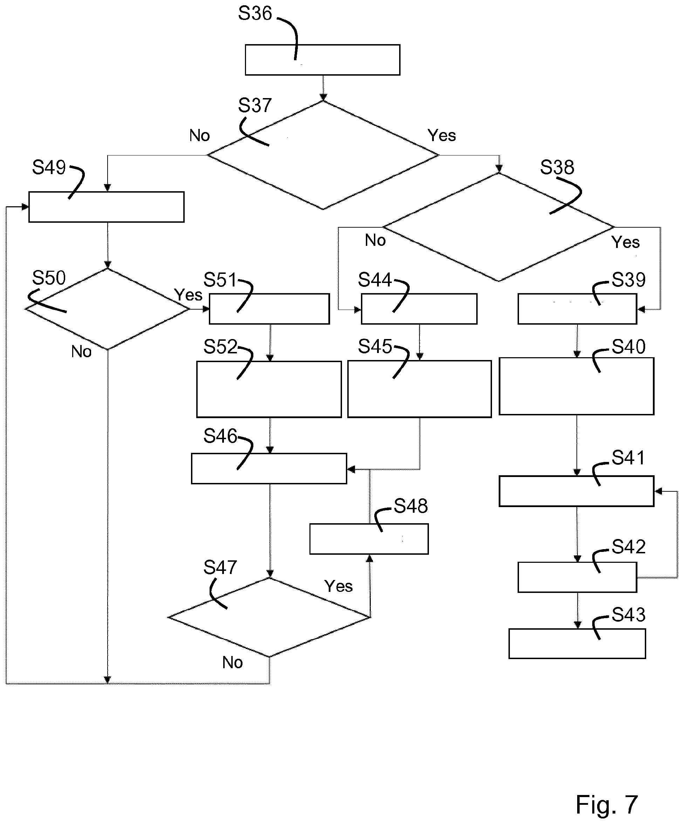

Fig. 7 shows a flow chart for another embodiment, which combines the approached of the embodiments according to Fig. 5 and 6. In step 36, a user opens a website. In step 37, it is determined, whether there is a matching special rule for this website. If there is a matching special rule ("Yes"), it is determined in step S38, whether this special rule is a "synthetic" special rule. If the special rule is a "synthetic" rule ("Yes"), the consent request is hidden from the user (step S39) and the matching special "synthetic" rule is combined with user preferences (step S40) loaded from the preference storage 17. In step S41, it is determined which data required for responding to the consent request still has to be written to the local storage 16. The determined data is stored to the local storage 16 in step S42. If all data is written, the method triggers a reload of the website in step S43. As all required data is written to the local storage 16, the reloaded website will assume that a consent request was already answered.

Back to step S38, if the special rule is not a "synthetic" rule ("No"), the consent request is hidden from the user (step S44) and the matching special rule is combined with user preferences (step S45) loaded from the preference storage 17. In step S46, the consent request is analysed regarding matching selectors. In step S47, it is determined, whether a matching selector is found. If there is a matching selector ("Yes"), a click is emulated in step S48 and the method returns to step S46. If no (more) matching selector ("No") is found, the method returns to step S49 and analysing received web data regarding the presence of a consent request.

Step S49 is also entered, if in step S37 no special rule is found ("No"). In step S50, it is determined, whether a matching common rule can be found. If there is a matching common rule ("Yes"), the consent request is hidden (step S51) and the matching common rule is combined with user preferences (step S52) loaded from the preference storage 17. After that, the method continues at step S46 checking for matching selectors.

Many modifications and other embodiments of the present disclosure will come to mind to the one skilled in the art to which the present disclosure pertains having the benefit of the teachings presented in the foregoing description and the associated drawings. Therefore, it is to be understood that the present disclosure is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference sign

- 1: system
- 2: arrangement
- 3: cloud rule system
- 4: rule handling system
- 5: machine learning algorithm
- 6: control unit
- 7: web data input
- 8: rule storage
- 9: web data analyser
- 10: consent request capturer
- 11: consent request handler
- 12: web browser
- 13: web server
- 14: browser window
- 15: user
- 16: local storage (e.g. for cookies)
- 17: preference storage
- 18: protocol storage
- 19: exception storage
- 20: load request handler
- 21: consent request notifier
- 22: feedback input

## Claims

1. Arrangement for automated handling of consent requests on webpages, preferably consent requests regarding data protection issues, comprising:
a control unit (6) configured to control at least parts of the arrangement (2),
a web data input (7) configured to receive web data from a web server (13),
a rule storage (8) configured to store handling rules,
a web data analyser (9) configured to analyse the web data received via the web data input (7) and to identify a consent request,
a consent request capturer (10) configured to capture the consent request identified by the web data analyser (9) and to prevent displaying of the consent request to a user (15), and
a consent request handler (11) configured to handle the consent request based on at least one of handling rules stored in the rule storage (8) and user preferences.

2. Arrangement according to claim 1, wherein at least one of the control unit (6), the web data analyser (9) and the consent request handler (11) is configured to trigger download and/or update of a handling rule in the rule storage (8).

3. Arrangement according to claim 1 or 2, wherein a handling rule defines at least one of characteristics of a consent request contained in web data, characteristics of responding to a consent request, and structure of data stored after responding to a consent request.

4. Arrangement according to one of claims 1 to 3, wherein, for preventing displaying of the consent request to a user (15), the consent request handler (11) is configured to change display settings of the consent requests, to change display settings of a browser windows (14) and/or to cancel a display action for the consent request.

5. Arrangement according to one of claims 1 to 4, wherein the consent request handler (11) is configured to perform at least one of triggering virtual clicking on a button of the consent request, selecting an option of the consent request, storing a cookie in a local storage (16) and storing data in a local storage (16).

6. Arrangement according to one of claims 1 to 5, additionally comprising a load request handler (20) configured to retrieve load requests for a new webpage and to trigger retrieval of a handling rule for the new webpage.

7. Arrangement according to one of claims 1 to 6, additionally comprising a consent request notifier (21) configured to notify a user (15) of a handled consent request.

8. Arrangement according to one of claims 1 to 7, wherein at least one of the control unit (6), the consent request capturer (10) and the consent request handler (11) comprises a feedback input (22), the feedback input (22) being configured to receive a user input regarding failed capturing and/or handling of a consent request.

9. Arrangement according to one of claims 1 to 8, wherein the arrangement is implemented as a web browser extension and/or is configured to communicate with a web browser (12) and/or a cloud rule system (3) via one or several application programming interfaces.

10. System for automated handling of consent requests on webpages, preferably consent requests regarding data protection issues, comprising:
multiple arrangements (2) according to one of claims 1 to 9, and
a cloud rule system (3) configured to store handling rules,
wherein at least one of the control unit (6), the web data analyser (9) and the consent request handler (11) of each arrangement (2) is configured to download handling rules from the cloud rule system (3) and to update handling rules stored in the rule storage (8) of the respective arrangement (2).

11. System according to claim 10, wherein at least one of the control unit (6), the web data analyser (9) and the consent request handler (11) of each arrangement (2) is additionally configured to download each of the handling rules stored at the cloud rule system (3), a predefined subset of the handling rules stored at the cloud rule system (3) and/or a handling rule for a currently accessed website.

12. System according to claim 10 or 11, additionally comprising a rule handling system (4), the rule handling system (4) being linked communicatively to the cloud rule system (3) and being configured to maintain handling rules stored in the cloud rule system (3).

13. System according to claim 12, wherein the rule handling system (4) uses a machine learning algorithm (5) for improving handling rules and/or is configured to perform at least one of tracking successfully applied handling rules, tracking update request for handling rules and tracking missing handling rules.

14. Cloud rule system configured to be used in a system according to one of claims 10 to 13.

15. Method for automated handling of consent requests on webpages, preferably consent requests regarding data protection issues, preferably for operating an arrangement according to one of claims 1 to 9 and/or for being used in a system according to one of claims 10 to 13, comprising:
receiving (S1), via a web data input (7), web data from a web server (13),
accessing (S2) at least one handling rule stored in a rule storage (8),
analysing (S3), by a web data analyser (9), the web data regarding the presence of a consent request,
capturing (S4), by a consent request capturer (10), the consent request thereby preventing displaying of the consent request to a user (15), and
handling (S5), by a consent request handler (11), the consent request based on the at least one handling rule and/or based on user preferences.
